# DEMANDE DE BREVET EUROPEEN

(11) **EP 1 004 817 A1**
(43) Date de publication de la demande: **31.05.2000**
(21) Numéro de dépôt: 99402876.9
(22) Date de dépôt: 19.11.1999
(51) Int. Cl.: F21S 8/04, F21V 23/00, H02G 3/20, F21V 27/02

(54) **Luminaire de type hublot, à entrée(s) de câble tangentielle(s)**

(30) Priorité: 25.11.1998 FR 9814822
(71) Demandeur: LEGRAND, F-87000 Limoges (FR); LEGRAND SNC, F-87000 Limoges (FR)
(72) Inventeur: Barrier, Emmanuel, 87800 Jourgnac (FR); Domingues, Jean-Jacques, 87100 Limoges (FR)
(74) Mandataire: CABINET BONNET-THIRION

(57) **Abrégé**

Il s'agit d'un luminaire comportant un socle (18), qui, présentant un fond (19) et une paroi latérale (20), forme globalement un corps de boîte, et qui, sur sa paroi latérale (20), au moins, présente au moins une entrée de câble (22).

Suivant l'invention, l'entrée de câble (22) appartient à un panneau (30) de la paroi latérale (20) qui, par rapport à la partie courante (32) de celle-ci, s'étend globalement en oblique en direction de l'intérieur du socle (18), en étant préférentiellement sensiblement perpendiculaire au plan tangent à cette paroi latérale (20) le long de la ligne de laquelle il est issu.

Application, notamment, aux hublots étanches à encastrer.

## Description

La présente invention concerne d'une manière générale les luminaires du type de ceux communément appelés hublots.

Elle vise plus particulièrement ceux de ces luminaires qui sont destinés à être encastrés dans un quelconque support, qu'il s'agisse par exemple d'une cloison sèche ou d'un mur en béton ou en maçonnerie.

En pratique, ces luminaires sont à engager dans une boîte d'encastrement qui a été préalablement mise en place dans ce support et dans laquelle débouchent les câbles nécessaires à sa desserte.

Ils comportent donc, le plus souvent, et cela est le cas, notamment, lorsqu'il s'agit d'un hublot étanche, un socle, qui, présentant un fond et une paroi latérale, forme globalement un corps de boîte, et qui, sur sa paroi latérale, au moins, présente au moins une entrée de câble propre à la pénétration d'un câble.

Le plus souvent, également, et cela est précisément le cas lorsqu'il s'agit d'un hublot étanche, ces luminaires se complètent par un couvercle, qui ferme le socle, et qui est au moins en partie translucide.

Le plus souvent, enfin, l'ensemble a, en plan, un contour globalement circulaire.

A ce jour, la ou les entrées de câble que comporte la paroi latérale du socle interviennent en pleine surface sur celle-ci.

La pénétration d'un câble dans le socle se fait donc à ce jour sensiblement radialement.

Il en résulte que si, ce qui est relativement probable, une telle entrée de câble ne se présente pas directement en regard du débouché du câble dans la boîte d'encastrement, ce câble doit être plus ou moins fortement plié pour sa pénétration dans le socle lors de l'installation du luminaire, ce qui rend relativement malaisées les opérations de câblage correspondantes, et ce qui peut également être à l'origine d'un endommagement intempestif, voire même de la casse, de l'un ou de l'autre des conducteurs électriques que comporte un tel câble.

De même, lors de l'engagement du socle dans la boîte d'encastrement, ce câble peut intempestivement être l'objet de pliages plus ou moins désordonnés et brutaux préjudiciables à son intégrité.

La présente invention a d'une manière générale pour objet une disposition permettant de minimiser ces inconvénients et conduisant en outre à d'autres avantages.

De manière plus précise, elle a pour objet un luminaire du genre comportant un socle, qui, présentant un fond et une paroi latérale, forme globalement un corps de boîte, et qui, sur sa paroi latérale, au moins, présente au moins une entrée de câble, ce luminaire étant d'une manière générale caractérisé en ce que l'entrée de câble appartient à un panneau de la paroi latérale qui, par rapport à la partie courant de celle-ci, s'étend globalement en oblique en direction de l'intérieur du socle.

Grâce à une telle obliquité, le pliage du câble lors de sa pénétration dans le socle peut avantageusement être minimisé.

Par exemple, suivant une forme préférée de réalisation, le panneau de la paroi latérale du socle auquel appartient l'entrée de câble suivant l'invention s'étend sensiblement perpendiculairement au fond de ce socle et sensiblement perpendiculairement au plan tangent à la paroi latérale le long de la ligne de laquelle il est issu.

Ainsi, au lieu de se faire radialement, la pénétration du câble dans le socle par une telle entrée de câble se fait avantageusement sensiblement parallèlement à un plan tangent à la partie courante de la paroi latérale de celui-ci.

Les opérations initiales de câblage lors de l'installation du hublot s'en trouvent avantageusement facilitées, et le ou les câbles concernés se trouvent alors eux-mêmes avantageusement ménagés.

Préférentiellement, et suivant un développement de l'invention, la paroi latérale du socle forme, annulairement, en décrochement par rapport à sa partie courante, à distance de son débouché, une banquette, qui, s'étendant en saillie vers l'intérieur du socle, forme, extérieurement, en creux sur celui-ci, un dégagement, en s'étendant par exemple à compter du fond du socle, et l'entrée de câble intervient à la faveur de cette banquette.

Grâce au dégagement formé par cette banquette, le volume disponible pour le câble entre la paroi latérale du socle et celle de la boîte d'encastrement se trouve avantageusement accru, ce qui, lors de l'engagement du socle dans la boîte d'encastrement, facilite avantageusement la mise en place du câble, en permettant l'enroulement de celui-ci autour du socle, et ce qui facilite donc également avantageusement les opérations correspondantes, tout en ménageant avantageusement le câble.

En outre, grâce à la disposition particulière de la ou des entrées de câble suivant l'invention, l'orientation angulaire du socle dans la boîte d'encastrement peut avantageusement être plus facilement ajustée si cela est nécessaire.

De même, grâce à la disposition particulière de ces entrées de câble, les câbles pénétrant par celles-ci dans le socle se trouvent avantageusement orientés favorablement dans celui-ci, ce qui facilite leur cheminement dans ce socle, et ce qui facilite les opérations nécessaires à leur raccordement à l'intérieur de celui-ci.

Certes, dans le brevet allemand No 25 60 390, il est décrit une boîte d'encastrement, qui est destinée à être engagée dans une paroi, et qui présente, à la faveur d'un renfoncement affectant tant sa paroi latérale que son fond, une ouverture globalement oblique, pour l'engagement d'un tube.

Mais, outre que cette boîte d'encastrement n'appartient pas à un luminaire, son ouverture oblique est trop éloignée de sa paroi latérale pour qu'elle puisse être considérée comme appartenant à celle-ci, le renfoncement auquel elle appartient empiétant de manière non négligeable sur son volume interne, au détriment de l'espace disponible dans celui-ci.

Il en est d'autant plus ainsi que cette ouverture est non seulement oblique par rapport à sa paroi latérale, mais encore par rapport à son fond.

De plus, la pénétration d'un tube à la faveur de cette ouverture se fait encore suivant un plan sensiblement radial par rapport à la paroi latérale.

Il ne s'agit donc pas d'une ouverture "tangentielle" au sens de la présente invention.

Les caractéristiques et avantages de l'invention ressortiront d'ailleurs de la description qui va suivre, à titre d'exemple, en référence aux dessins schématiques annexés sur lesquels :

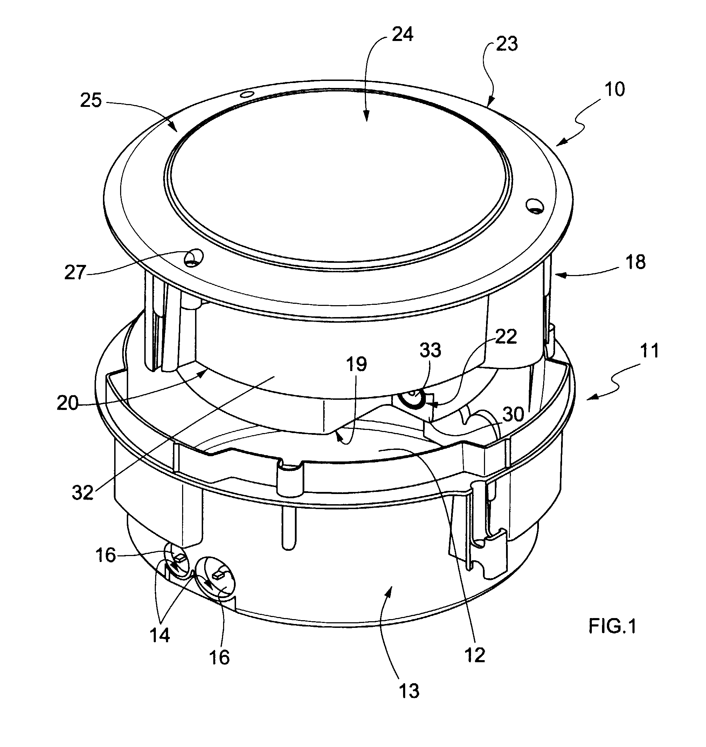

la figure 1 est une vue en perspective d'un luminaire suivant l'invention et de la boîte d'encastrement dans laquelle il doit être engagé ;

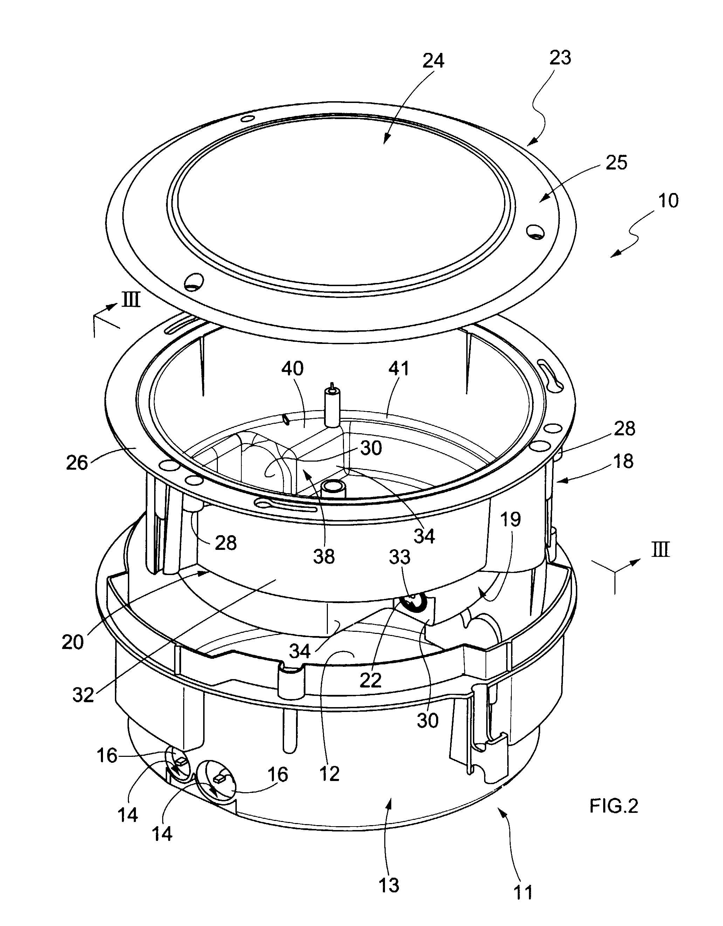

la figure 2 est une vue en perspective éclatée de l'ensemble ;
la figure 3 est, à échelle différente, et suivant la ligne III-III de la figure 2, une vue en coupe axiale du socle que comporte le luminaire suivant l'invention, représenté isolément ;
la figure 4 est, à l'échelle de la figure 3, et suivant la ligne IV-IV de cette figure 3, une vue en coupe transversale de ce socle et de la boîte d'encastrement associée une fois qu'il est en place dans celle-ci.

Dans la forme de mise en oeuvre représentée sur ces figures, le luminaire 10 suivant l'invention est, de manière connue en soi, destiné à être engagé, et enfoncé, dans une boîte d'encastrement 11 supposée être déjà en place dans un quelconque support, non représenté, à équiper.

Cette boîte d'encastrement 11 étant bien connue par elle-même, et ne relevant pas en propre de la présente invention, elle ne sera pas décrite dans tous ses détails ici.

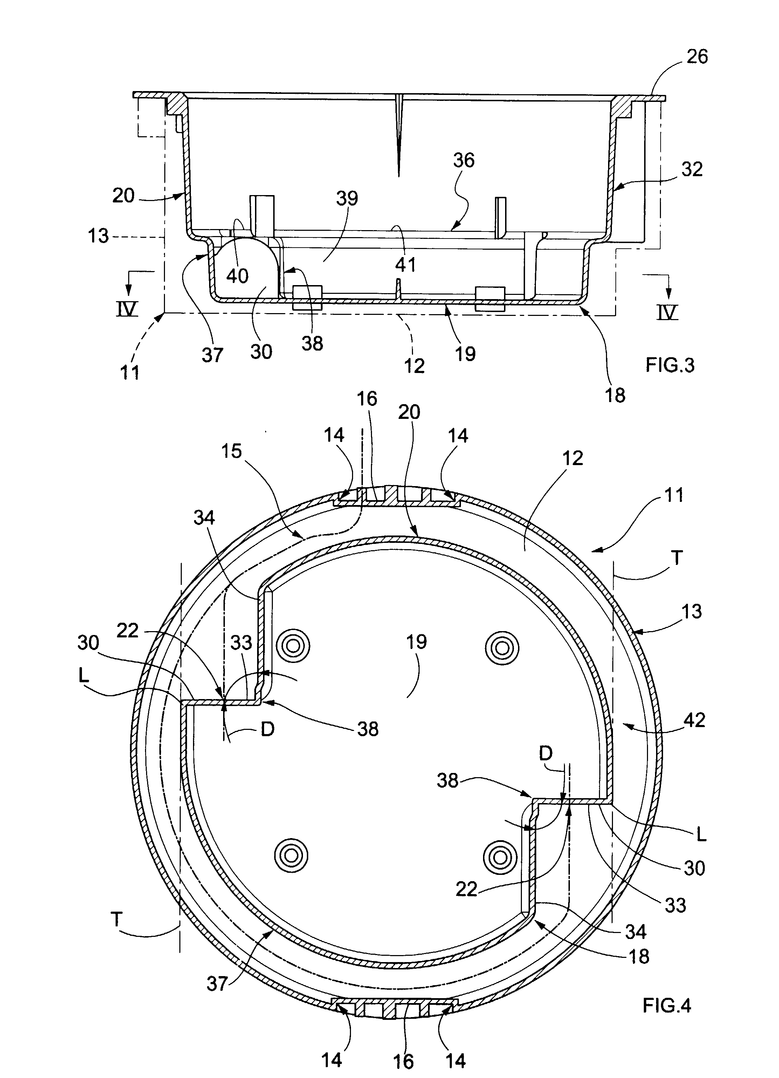

Il suffira d'indiquer qu'elle a, en plan, un contour globalement circulaire, et qu'elle présente un fond 12 et une paroi latérale 13, avec, en positions diamétralement opposées l'une par rapport à l'autre, sur cette paroi latérale 13, au voisinage de la jonction de celle-ci avec le fond 12, deux paires d'entrées de câble 14 propres chacune à l'arrivée d'un quelconque câble 15, tel que schématisé en traits interrompus sur la figure 4.

En pratique, chacune de ces entrées de câble 14 est obturé par un opercule défonçable 16.

De manière connue en soi, également, le luminaire 10 suivant l'invention a, en plan, un contour globalement circulaire, et il comporte un socle 18, qui, présentant lui aussi un fond 19 et une paroi latérale 20, forme globalement, comme la boîte d'encastrement 11, un corps de boîte, et qui, sur sa paroi latérale 20, au moins, présente, suivant des dispositions décrites plus en détail ultérieurement, au moins une entrée de câble 22.

Dans la forme de réalisation représentée, le luminaire 10 suivant l'invention comporte, en outre, de manière connue en soi, un couvercle 23, qui ferme le socle 18, en pratique de manière étanche, et qui est au moins en partie translucide.

Un tel couvercle 23 ne relevant pas, par lui-même, de la présente invention, il ne sera pas non plus décrit dans tous ses détails ici.

Il suffira d'indiquer que, dans la forme de réalisation représentée, il comporte, dans sa zone centrale, une verrine 24, qui forme diffuseur, et, à sa périphérie, autour de cette verrine 24, pour sa fixation au socle 18, une couronne 25, qui forme enjoliveur.

Par exemple, et tel que représenté, la paroi latérale 20 du socle 18 forme, annulairement, à son débouché, un rebord 26, qui fait saillie vers l'extérieur, et la couronne 25 du couvercle 23 présente, de place en place, des puits 27, pour le passage de vis, non visibles sur les figures, propres à sa fixation à ce rebord 26, des puits de vissage 28 débouchant en correspondance à cet effet à la surface de celui-ci.

Suivant l'invention, l'entrée de câble 22 du socle 18 appartient à un panneau 30 de sa paroi latérale 20 qui, par rapport à la partie courante 32 de celle-ci, s'étend globalement en oblique en direction de l'intérieur du socle 18.

Dans la forme de réalisation représentée, le socle 18 présente, sur sa paroi latérale 20, en positions diamétralement opposées l'une par rapport à l'autre, deux entrées de câble 22, ainsi qu'il est mieux visible, par exemple, sur la figure 4.

Préférentiellement, et tel que représenté sur cette figure 4, ces deux entrées de câble 22 sont orientées en sens opposés l'une par rapport à l'autre.

En pratique, les deux entrées de câble 22 sont identiques l'une à l'autre, et, dans la forme de réalisation représentée, elles sont chacune obturées par un opercule défonçable 33.

Préférentiellement, et cela est le cas dans la forme de réalisation représentée, le panneau 30 de la paroi latérale 20 auquel appartient une telle entrée de câble 22 s'étend sensiblement perpendiculairement au fond 19 du socle 18, et, ainsi qu'il est mieux visible sur la figure 4, sensiblement perpendiculairement au plan tangent T à la paroi latérale 20 le long de la ligne L de laquelle il est issu.

Les entrées de câble 22 suivant l'invention peuvent ainsi être qualifiées de "tangentielles".

Dans la forme de réalisation représentée, le panneau 30 de la paroi latérale 20 auquel appartient une telle entrée de câble 22 forme un dièdre D avec un autre panneau 34 de cette paroi latérale 20 qui, par rapport à la partie courante 32 de celle-ci, s'étend lui aussi globalement en oblique en direction de l'intérieur du socle 18.

Comme le panneau 30, ce panneau 34 s'étend lui aussi sensiblement perpendiculairement au fond 19 du socle 18.

Dans la forme de réalisation représentée, le dièdre D que forment ainsi les deux panneaux 30, 34 associés à une entrée de câble 22 est droit.

Autrement dit, le panneau 34 est sensiblement parallèle au plan tangent T à la paroi latérale 20 le long de la ligne L de laquelle est issu le panneau 30, et les deux panneaux 30, 34 sont perpendiculaires entre eux.

Dans la forme de réalisation représentée, les deux panneaux 30, 34 associés à une entrée de câble 22 s'étendent à compter du fond 19 du socle 18, sur une partie au moins de la hauteur de la paroi latérale 20 de celui-ci.

En pratique, et tel que représenté, ces deux panneaux 30, 34 ne s'étendent que sur une fraction de la hauteur de la paroi latérale 20.

Plus précisément, dans la forme de réalisation représentée, la paroi latérale 20 du socle 18 forme, annulairement, c'est-à-dire le long de son pourtour, en décrochement par rapport à sa partie courante 32, à distance de son débouché, une banquette 36, qui, s'étendant en saillie vers l'intérieur du socle 18, forme, extérieurement, en creux sur cette paroi latérale 20, un dégagement 37, et les entrées de câble 22 interviennent l'une et l'autre à la faveur de cette banquette 36.

Plus précisément, encore, les deux panneaux 30, 34 associés à une telle entrée de câble 22 appartiennent conjointement à un bossage 38 qui fait saillie vers l'intérieur du socle 18 à compter de la banquette 36.

Plus précisément, enfin, ce bossage 38 fait saillie sur le flanc 39 de la banquette 36, c'est-à-dire sur la partie de celle-ci qui s'étend perpendiculairement au fond 19.

Dans la forme de réalisation représentée, le bossage 38 ainsi formé par les deux panneaux 30, 34 s'étend à niveau avec la banquette 36, sa surface supérieure 40 étant sensiblement en continu avec la surface supérieure 41 de celle-ci.

En outre, dans cette forme de réalisation, la banquette 36 s'étend à compter du fond 19 du socle 18.

Il résulte de ce qui précède que, dans la forme de réalisation représentée, la partie courante 32 de la paroi latérale 20 du socle 18 est formée par la portion de cette paroi latérale 20 qui s'étend entre la banquette 36 et son débouché.

Lorsque, tel que schématisé en traits interrompus sur la figure 3, et tel que représenté en traits continus sur la figure 4, le socle 18 du luminaire 10 suivant l'invention est mis en place dans la boîte d'encastrement 11, par engagement dans celui-ci, il subsiste, entre la paroi latérale 20 de ce socle 18 et la paroi latérale 13 de cette boîte d'encastrement 11, un espace 42, qui se trouve avantageusement élargi au niveau du dégagement 37 de la paroi latérale 20 du socle 18, et qui peut ainsi être mis à profit pour enrouler le câble 15 autour de ce socle 18, tel que schématisé en traits interrompus sur la figure 4, jusqu'à sa pénétration dans ce socle 18 à la faveur de l'une ou l'autre des entrées de câble 22 tangentielles que comporte celui-ci, après élimination de l'opercule défonçable 33 obturant cette entrée de câble 22.

Bien entendu, la présente invention ne se limite pas à la forme de réalisation décrite et représentée, mais englobe toute variante d'exécution, notamment en ce qui concerne le nombre d'entrées de câble tangentielles mises en oeuvre.

D'autres entrées de câble peuvent d'ailleurs être en outre prévues sur la paroi latérale du socle et/ou sur son fond.

## Revendications

1. Luminaire du genre comportant un socle (18), qui, présentant un fond (19) et une paroi latérale (20), forme globalement un corps de boîte, et qui, sur sa paroi latérale (20), au moins, présente au moins une entrée de câble (22), caractérisé en ce que l'entrée de câble (22) appartient à un panneau (30) de la paroi latérale (20) qui, par rapport à la partie courante (32) de celle-ci, s'étend globalement en oblique en direction de l'intérieur du socle (18).

2. Luminaire suivant la revendication 1, caractérisé en ce que le panneau (30) de la paroi latérale (20) auquel appartient l'entrée de câble (22) s'étend sensiblement perpendiculairement au fond (19) du socle (18).

3. Luminaire suivant l'une quelconque des revendications 1, 2, caractérisé en ce que le panneau (30) de la paroi latérale (20) auquel appartient l'entrée de câble (22) s'étend sensiblement perpendiculairement au plan tangent (T) à la paroi latérale (20) le long de la ligne (L) de laquelle il est issu.

4. Luminaire suivant l'une quelconque des revendications 1 à 3, caractérisé en ce que le panneau (30) de la paroi latérale (20) auquel appartient l'entrée de câble (22) forme un dièdre (D) avec un autre panneau (34) de cette paroi latérale (20) qui, par rapport à la partie courante (32) de celle-ci, s'étend lui aussi globalement en oblique en direction de l'intérieur du socle (18).

5. Luminaire suivant la revendication 4, caractérisé en ce que l'autre panneau (34) de la paroi latérale (20) s'étend lui aussi sensiblement perpendiculairement au fond (19) du socle (18).

6. Luminaire suivant l'une quelconque des revendications 4, 5, caractérisé en ce que le dièdre (D) que forment les deux panneaux (30, 34) associés à l'entrée de câble (22) est droit.

7. Luminaire suivant l'une quelconque des revendications 4 à 6, caractérisé en ce que les deux panneaux (30, 34) associés à l'entrée de câble (22) s'étendent à compter du fond (19) du socle (18), sur une partie au moins de la hauteur de la paroi latérale (20) de celui-ci.

8. Luminaire suivant la revendication 7, caractérisé en ce que les deux panneaux (30, 34) associés à l'entrée de câble (22) ne s'étendent que sur une fraction de la hauteur de la paroi latérale (20).

9. Luminaire suivant l'une quelconque des revendications 4 à 8, caractérisé en ce que les deux panneaux (30, 34) associés à l'entrée de câble (22) appartiennent conjointement à un bossage (38) qui fait saillie vers l'intérieur du socle (18).

10. Luminaire suivant l'une quelconque des revendications 1 à 9, caractérisé en ce que la paroi latérale (20) du socle (18) forme, en décrochement par rapport à sa partie courante (32), à distance de son débouché, une banquette (36), qui, s'étendant vers l'intérieur du socle (18), forme, extérieurement, en creux, sur cette paroi latérale (20), un dégagement (37), et l'entrée de câble (22) intervient à la faveur de cette banquette (36).

11. Luminaire suivant les revendications 9 et 10, prises conjointement, caractérisé en ce que le bossage (38) auquel appartiennent les deux panneaux (30, 34) associés à l'entrée de câble (22) fait saillie vers l'intérieur du socle (18) à compter de la banquette (36).

12. Luminaire suivant la revendication 11, caractérisé en ce que le bossage (38) s'étend à niveau avec la banquette (36).

13. Luminaire suivant l'une quelconque des revendications 1 à 12, caractérisé en ce que le socle (18) présente, sur sa paroi latérale (20), en positions diamétralement opposées l'une par rapport à l'autre, deux entrées de câble (22).

14. Luminaire suivant la revendication 13, caractérisé en ce que les deux entrées de câble (22) sont orientées en sens opposés l'une par rapport à l'autre.
